(19) Europäisches Patentamt / European Patent Office / Office européen des brevets

(11) **EP 2 816 502 A1**

(12) **EUROPEAN PATENT APPLICATION**

(43) Date of publication:
24.12.2014 Bulletin 2014/52

(51) Int Cl.:
*G06K 9/00* (2006.01)    *G06T 11/80* (2006.01)

(21) Application number: **13172338.9**

(22) Date of filing: **17.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Betser Information Technologies Limited**
**London NW1 6ND (GB)**

(72) Inventor: **Betser, Jonathan**
**London, Greater London NW1 6ND (GB)**

(54) **Retouching of portait images based on supervised face feature detection**

(57)    Automatic portrait editing and retouching method and apparatus are disclosed using scale and orientation invariant face feature detections, providing the user with the position and orientation of the eyes and the mouth along with the face contours in transparency over the picture. The user can then correct if necessary the detection before sending an automatic editing or filtering request containing the corrected coordinates to the apparatus.

**FIG 9b**

EP 2 816 502 A1

**Description**

**FIELD OF THE INVENTION**

The field of the invention relates to a method and apparatus that perform automatic image processing of portraits in a digital photograph using the supervised detection of different face features, embedding technologies of face feature detection and digital image processing.

**BACKGROUND**

In the past two decades digital cameras have been increasingly accessible, progressively replacing film cameras and making digital pictures the most common media for both amateur and professional photographers.

This has naturally lead to an increase in the need for digital retouching, and now image retouching software programs are very common in many different devices such as computers, laptops, cameras, and even mobile phones.

Besides, since 2000 the domain of object detection in pictures has progressed significantly, evolving from pixel based machine learning systems to classifiers using more adapted sets of characteristics to describe the picture.

In 2001 Viola and Jones have obtained an unprecedented face detection success ratio using classifiers based on a set of 4 simple characteristics. In 2002 Rainer Lienhart and Jochen Maydt have extended this method using a set of 14 characteristics and obtained even better results.

Improvements in the learning process have been implemented in 2004 and 2006 by the introduction of boosting techniques (Patents US2004186816 and US2006062451) that combines multiple weighted weak classifiers to achieve a more robust classifier.

More reliable technology lead to many new applications in different domains such as security, social networking and image processing. In the image processing domain, face feature detection is used as a tool to automatize portrait edition and retouching.

During the last few years some portrait retouching techniques using face feature detection have emerged:

**[0009]** - Patent JP2011090466 describes a method and apparatus that extract face features automatically

**[0010]** - Patent CN101551911 describes a system to generate portrait sketches from a digital picture using face detection

**[0011]** - Patent US2013044947 describes a method and apparatus to filter an image with masks constructed on the localization of face features.

**SUMMARY**

Technology is described for achieving automatic portrait editing and retouching using supervised face feature detections.

The face feature detections are based on an innovative scale invariant and orientation invariant method using a set of existing orientation variant facial feature classifiers, providing the user with the position and orientation of the eyes and the mouth along with the face contours in transparency over the picture.

Users can then correct if necessary the detection before sending an automatic editing or filtering request containing the corrected coordinates to the apparatus.

Tools and filters can then use the accurate positions of the facial features to achieve automatic digital image processing of portraits.

This supervised portrait processing method can be applied on any device that can display an image, perform the vectorial drawing of the face feature descriptors, and either process face features detection algorithm itself, or connect to a server that computes the face feature detection algorithm.

**BRIEF DESCRIPTION OF THE PICTURES**

FIG. 1 depicts an artificial neuron. It is the basis one of most common machine-learning classifiers.

FIG. 2 presents the features called "Haar" or "Haar-like" features. They are used for object detection using Rainer Lienhart and Jochen Maydt method.

FIG. 3 depicts the metric rule to validate the left eye.

FIG. 4 shows an example of face feature conflict, where right eye of left face conflicts with left eye of right face.

FIG. 5 depicts the weakness of orientation variant classifiers; only the face in the middle is detected.

FIG. 6 depicts the result of face detection after a 30° rotation of the picture in FIG. 5 using the same orientation variant classifier; only the face on the right is detected.

FIG. 7 depicts the situation when the results of two face feature detections are conflicting. On the top, face detection is applied to the original picture, on the bottom to the rotated one.

FIG. 8 is the flowchart of the innovative orientation invariant face detection algorithm.

FIG. 9a and 9b show an example of face descriptor displayed as transparent vectorial shapes before (9a) and after user correction (9b).

FIG. 10 describes the overall system architecture.

FIG. 11 focuses on the architecture of the image processing server.

## DETAILED DESCRIPTION OF THE INVENTION

**a.** Introduction

The present invention is a system that performs automatic portrait editing and retouching using a supervised orientation invariant face detection method.

Some of the elements used by this system are commonly used in the imagery industry, or on web developments. Thus the system contains some libraries and source code from third parties.

Those features comprise of:

- The orientation variant face feature detections on which the orientation invariant method is based. The algorithms of Haar-like feature based object detection as well as the face feature classifiers are provided by the Intel® open source library called OpenCV;
- The library used to load, navigate and zoom dynamically on pictures using HTML canvas is called Seadragon Ajax and has been developed by Microsoft®.

The system is based on a N-tier architecture containing parallelized processes that performs:

- computation of the different face features on different rotations of the picture to get orientation invariance in the face detection (see section **c)**;
- application of face metrics to combine face feature detection results (see section **b)** in a face descriptor (see section **d)** provided to the user on a web HTML canvas;
- image processing filters based on the face descriptor with user corrections if any are necessary.

Hereafter in section **b** the face metrics used to combine the different Haar classifier results are described. The section **c** demonstrates how orientation invariant face detection is obtained, and how to get the orientation angle of detected faces. Then in section **d** the face descriptor is presented along with the technique that allows users to correct it in order to perform accurate portrait filtering. The section **e** deals with the architecture of the system, and the last section **f** depicts the user workflow.

**b.** Using face metrics to combine multiple Haar classifiers

The basis of the most common object detection algorithms consists in classifying an image into two categories:

- The image contains the object
- The image does not contain the object

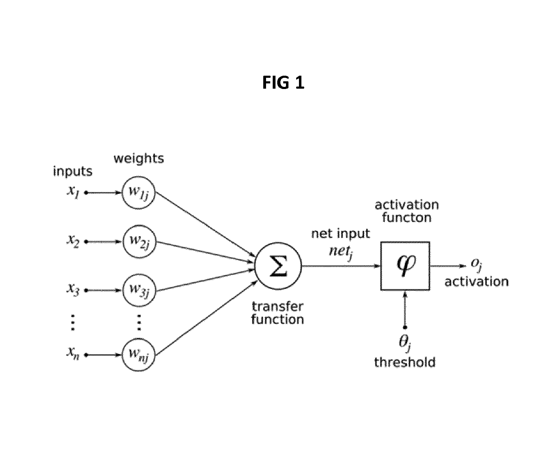

To achieve this, a first common approach is to link each pixel x of the image to an artificial neuron though an artificial synapse which applies a specific weight factor w, as shown in FIG. 1.

The weight factors are computed using a training set of input images for which the output result of the detection is provided performing a back propagation of the error that adjusts the weight factors.

Such a neural network will give results after training just a little bit better than random, and thus it is not a robust face detection technique as such. It is called a weak classifier.

To build a more robust classifier, boosting techniques are used, combining a whole set of weak classifiers, which can be composed of artificial neural networks but also other kinds of weak classifiers. It was first developed by Freund, Yoav and Schapire, and it is the subject of several patents such as US2004186816 and US2006062451.

In order to make the training more efficient it is better to first describe the picture in terms of characteristics or wavelets rather than pixels because a structured set of characteristics carries much more relevant information about objects than a set of pixels does.

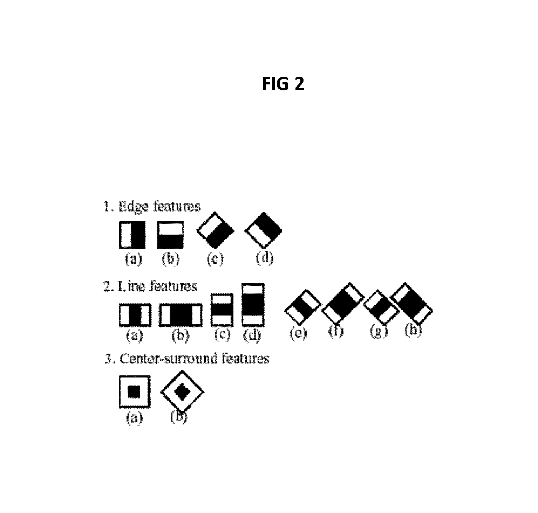

Haar cascades, developed by Rainer Lienhart and Jochen Maydt, is the concept of describing an object to detect using such a set of simple characteristics (see FIG. 2). The object descriptor is a combination of those characteristics using multiple scales. This is the method which is being used in the present system to achieve the orientation variant detection of the different face features.

It is an extension of the Viola and Jones model that was priory using a set of only four primitive characteristics.

5 different Haar classifiers are used in the present system. They are provided by the Intel® OpenCV Foundation and achieve specific orientation variant detection for the following face features:

- face contour
- left eye
- right eye
- mouth
- nose

Each eye, nose and mouth that matches a face contour according to the face metrics rules raises the score for the resulting face detection.

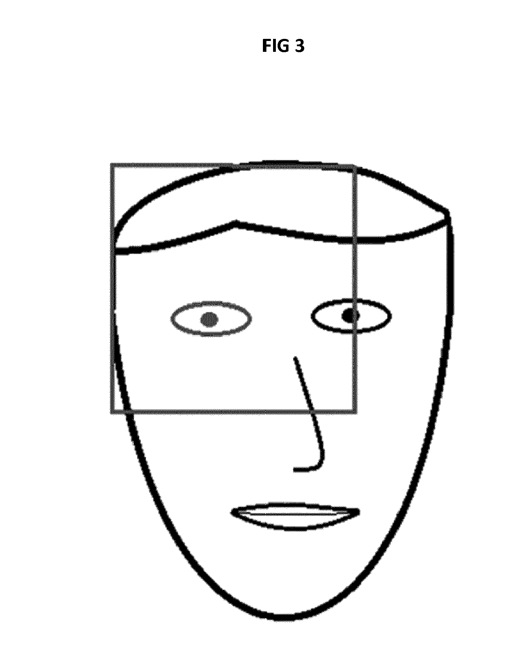

See in FIG. 3 an example of metric rule that invalidates left eyes that are detected outside the drawn box. It is located on the top-left corner of the face, its width is 75% of the face width and its height is 50% of the face height.

The more matched features the higher the linked face detection is. Here is the score associated to each face feature: each eye = 37pts, mouth = 18pts, nose = 7pts, face contour = 1pt. The minimum score (only face contour is detected) is 1, while the maximum score is:

$$\text{Max score} = 1 + 2 * 37 + 18 + 7 = 100$$

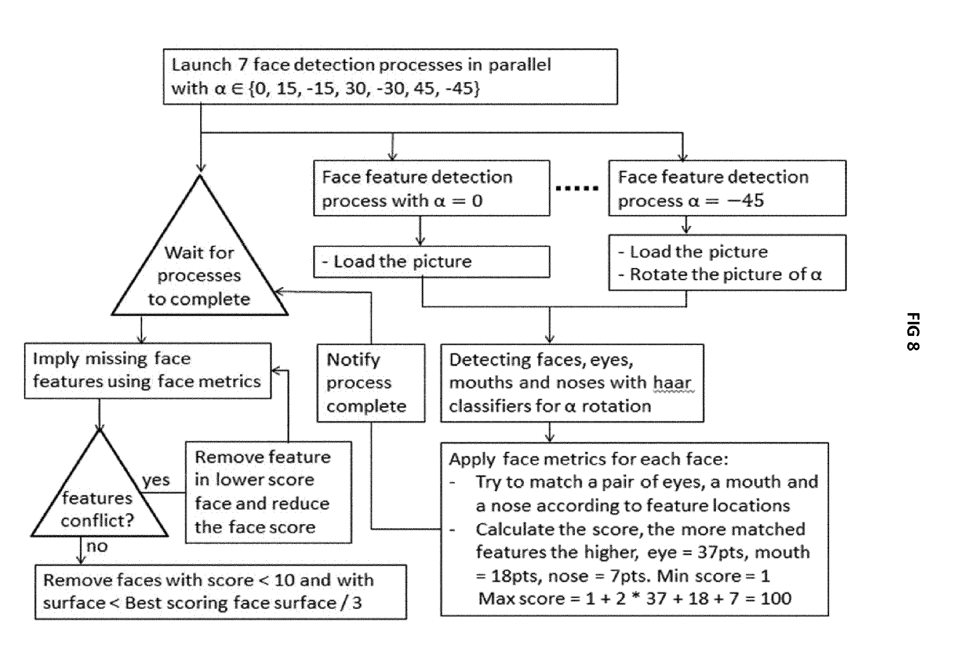

Similar metric rules are applied for the right eye, the nose and the mouth. The face detections that present a score too low ( < 10), or a too small surface ( < Best scoring face surface / 3) are filtered in order to reduce the presence of false positive detections (see the flowchart in FIG. 8).

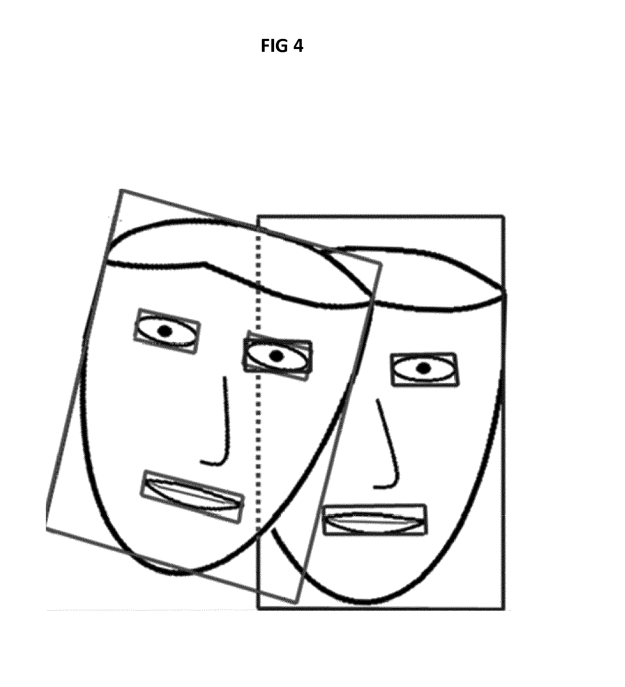

When two faces are really close to each other, one face feature may match two different face contours. Metric rules also resolve these kinds of conflicts (see FIG. 4).

Indeed, in the example shown in FIG. 4, the conflicted eye is associated with the left face, as the metric rule described in FIG. 3 rejects that potential face feature for the face on the right.

**c.** Orientation invariant face detection

Haar cascades, due to their multiple scaled characteristics model, are scale invariant, which means that both faces close and far from the camera can be detected.

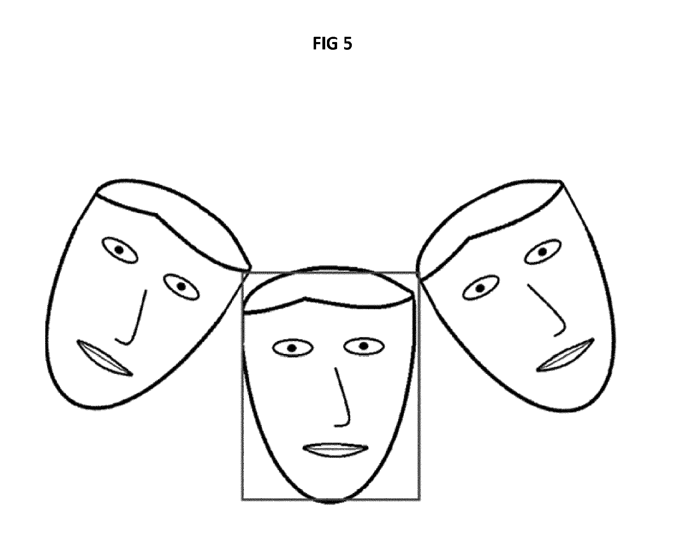

However, they are not orientation invariant as such. See on FIG. 5 the schema of a Haar feature based face detection on a picture containing one non-rotated and two rotated faces. Only the non-rotated face is detected.

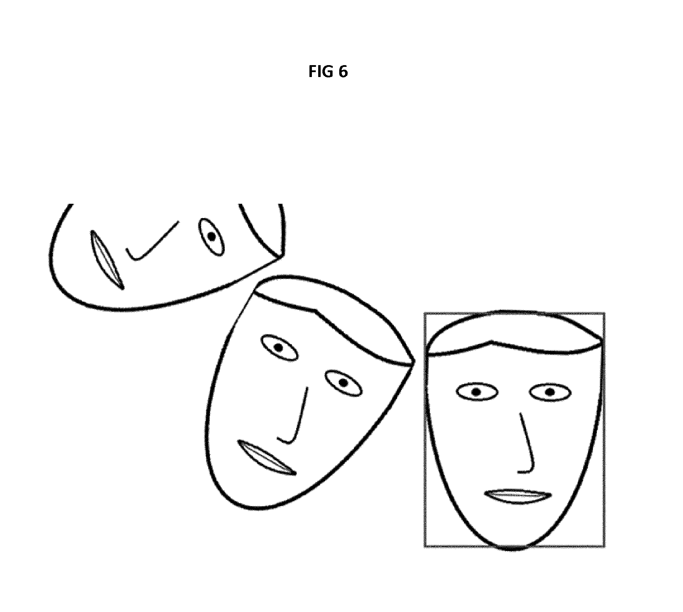

But then, if a rotation of 30 degree clockwise is applied on that portrait, the Haar detection now detects the face on the right. See on FIG. 6 the schema of Haar feature based detection on the rotated picture.

Several central rotations are applied to the picture to achieve orientation invariance, and for each of these rotations all face feature detections are applied. To speed up the rotation process as well as the face detection process, especially for high resolution pictures, the detection is applied to a sampled image with a maximum size of 640x480. If the original picture can be contained in 640x480 no sampling is needed.

Moreover, in order to get a better performance the different rotated face detections are processed in parallel to different processes. A semaphore is used to limit the number of parallel detections in each server.

For a 15° degree step, which is the value chosen for the system, 24 detections are necessary to test all different angles (360 / 15 = 24). The face detection is then efficient even if the picture is not correctly rotated. It can help rotating the picture automatically by choosing the rotation that provided the highest detection score.

Passage matrices are used to convert the detected coordinates from the sampled and centre-rotated vectorial space R to the original vectorial space O:

$$P_{R \to 0} = M_{scl0' \to 0} * M_{tr\,0' \to c'} * M_{rot} * M_{tr\,c' \to 0'}$$

where:

- $M_{rot}$ is a rotation matrix;
- Mtr C'→O' is the translation matrix from the centre of the picture to the origin of the picture;

- Mtr O'→C' is the opposite translation matrix to translate the picture back to the centre;
- $M_{sclO'\to O}$ is the scale matrix to convert sampled coordinates to the original vectorial space.

If it is assumed that the picture is correctly rotated, then a threshold is applied to reduce the computation charge. The chosen value is 45° which requires then only 7 different rotated detections: 0°, 15°, -15°, 30°, - 30°, 45°, and -45°.

If there is no assumption that the picture is correctly rotated then the 24 different rotations are computed: 0°, 15°, -15, 30°, -30° ... 180°. If the best score is obtained with a rotation angle outside the range [-45; 45] then the picture is automatically rotated.

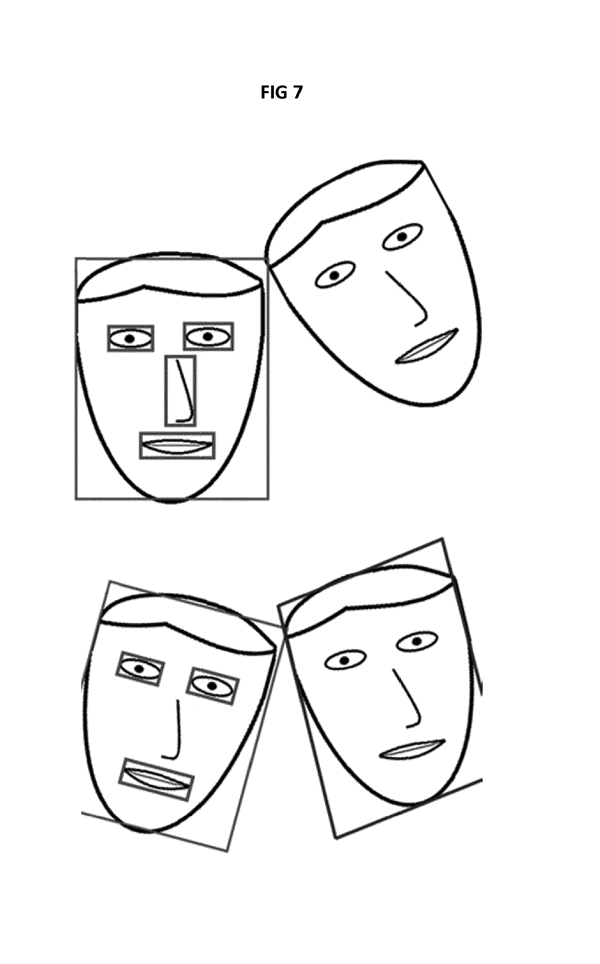

Another problem that occurs very frequently when detecting faces on several rotations is that a same face can be detected several times. The issue is resolved by choosing the overlapped face detection with the highest detection score. The other face detections that overlap it are then filtered. See an example in FIG. 7.

In FIG. 7 the left face has been detected twice, a first time without rotation (above), and a second time with a 15° clockwise rotation (below). To resolve that issue the highest detection score is chosen. In this example the detection without rotation has detected the nose, whereas the 15° rotated one has not, so the conflict is resolved by picking up the non-rotated detection for the left face. The right face is not conflicted here as it is only detected on 15° rotation.

The face detection method is summed up in the flowchart depicted in FIG. 8.

**d.** Face descriptor on HTML canvas

Unlike patents JP2011090466, CN101551911, and US2013044947, the present use of face detection is supervised by the user, which mean that a vectorial drawing system is used to provide the face feature detection results to the user, thus making it possible to adjust them so that face feature localizations can be as accurate as required.

HMTL Canvas is part of the HTML standards version 5 as defined by the W3C. Using this vectorial drawing technology makes the system usable by most browsers from September 2012, without any plugin such as Flash or Silverlight. See hereafter the minimal browser versions required:

| Internet Explorer | Firefox | Safari (Desktop) | Chrome |
|---|---|---|---|
| 9.0 | 2.0 | 3.1 | 4.0 |
| Opera (Desktop) | Safari (Mobile) | Opera (Mobile) | Android Brov |
| 9.0 | 3.2 | 10.0 | 2.1 |

From the face detection process described in sections b and c, the server builds a set of face contours associated with from 0 to 4 face features (eye left, eye right, mouth, and nose) along with a rotation angle.

For missing face features a default position is defined using the position of the face contour and the positions of the detected face features. If no face has been detected on the picture on any rotation, then a default face is used with default face features and positioned in the centre of the picture. It will be up to the user to define the position of the faces in that worst case.

The client receives the list of all the face coordinates from the server. Each set of face coordinates contains the following information:

- Rotation Angle;
- Face contour rectangle coordinates;
- Left eye rectangle coordinates;
- Right eye rectangle coordinates;
- Mouth rectangle coordinates;
- Nose rectangle coordinates.

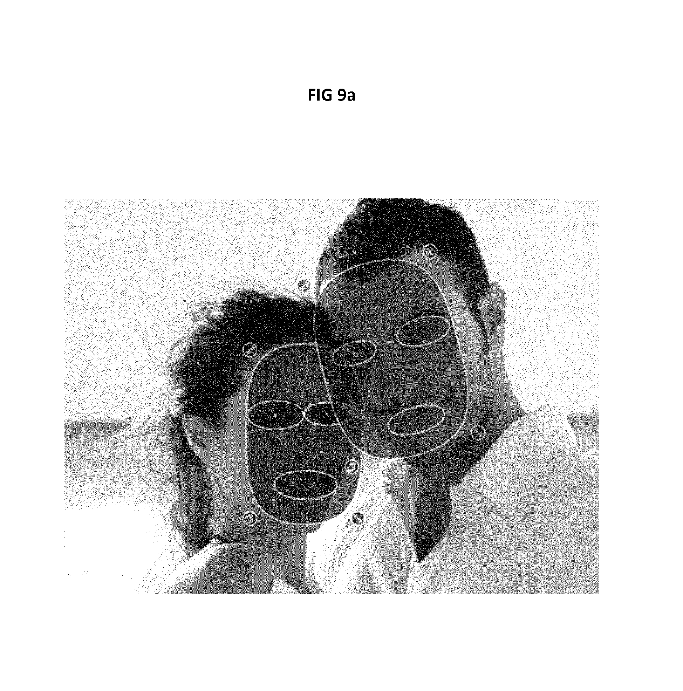

The client can then display those contours in transparency over the picture using an HTML canvas. In the example shown in FIG. 9a the face contours, eyes and mouths are displayed.

In FIG. 9a, 2 faces have been detected, one without rotation and one with 15° anticlockwise rotation. The client is here configured to display the face contours, the eyes and the mouth. The nose could be also displayed in the same fashion.

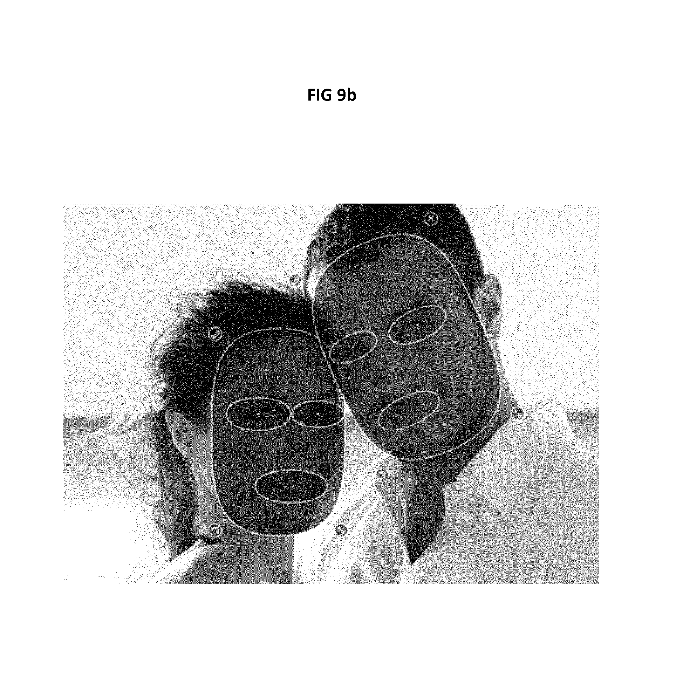

The user can then correct that face descriptor by dragging the different elements with the mouse or using a touchpad to place them to their very accurate position. This operation is performed on the web client side using JavaScript. The picture in FIG. 9b is an example of user-adjusted face descriptor.

After the corrections performed by the user on the example shown in FIG. 9b, the faces overlap much less. This helps the image processing algorithm to apply automatic editing tools and filters accurately on the portraits and on the different face features.

Possible applications are removing skin and face contour defects, removing red eyes, changing the colour of the eyes or the skin, simulating application of make-up, and modifying the face expression. This enumeration is not exhaustive.

The four icons shown around the faces in FIG. 9a and 9b are tools to manipulate the face descriptor. They make it possible for the user to rotate, resize, duplicate and delete face detections:

**1.** Rotating and resizing tools (icons in the top-left and bottom-right of the face descriptor) used to correct the face detections;

**2.** Duplicating tools (icon in the bottom-left of the face descriptor) is used when a face is missing. It adds up a copy of the detected face detection next to it, and the user can then place it on the missing face;

**3.** Deleting tool (icon in the top right of the face descriptor) is used to remove false positive detections.

**e.** Scalable architecture to provide the web service to a large number of users

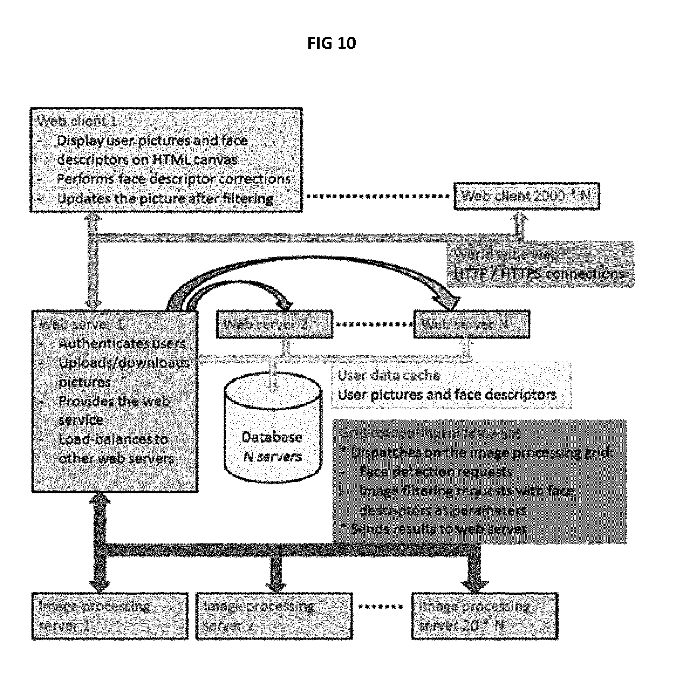

The system is based on an N-tier architecture which means that user interface, functional process logic, data storage and data access are processed in 4 independent modules (see FIG 10):

**1.** The user interface is the web client processed by the user browser (Safari, IE, Chrome, Firefox, Opera...). It contains HTML and JavaScript code. It is responsible for:

○ Uploading the picture to the web server;
○ Displaying the original picture on a HTML canvas;
○ Reading the face detection results from the web server display the face descriptor (see section **d**) over the HTML canvas in transparency;
○ Performing corrections on the face descriptor;
○ Sending filter requests, giving the corrected face descriptor in parameter.

**2.** The web server authenticates the client, providing the web service to authenticated users. It is also in charge of uploading and downloading pictures and load-balancing the users on other web servers when too many users are connected;

**3**. The database has a role of data caching. It stores the user pictures and the face descriptors, therefore if they are used a second time it is neither necessary to upload the picture nor performing the face detection;

**4.** A grid of image processing servers performs the face detections and the filtering. It communicates with the web servers with a middleware protocol using TCP connections that handles disconnection issues and load balancing.

This architecture is fully scalable, which means that the number of users that can use the system simultaneously is unlimited in theory. In practice it is limited by the number of servers available.

For instance, if 66 servers are available, there would be 3 web servers, 3 servers dedicated to the database, and 20 * 3 = 60 servers would be in charge of the image processing. That would allow concurrent use of the whole system by 2000 * 3 = 6000 users. See FIG. 10.

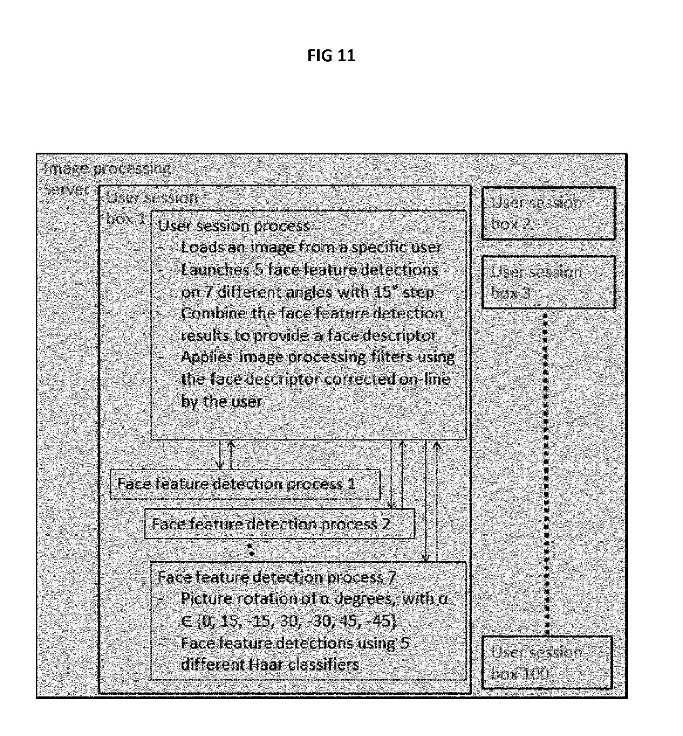

There are many more image processing servers than web servers or database servers because face detection and image processing are the most resource consuming tasks. FIG. 11 shows the architecture of an image processing server.

Image processing servers need to process a large number of simultaneous threads to perform face feature detections, so they require computers containing several central processing units, such as Intel® Xeon. They are responsible for loading pictures in RAM memory, so they need a large RAM capacity and thus run on a 64 bit operating system.

They are also responsible for applying filters to the image, and re-generating the picture in Microsoft® Seadragon Ajax deep-zoom format, which is a web dedicated picture format that shows the picture in a HTML canvas optimizing the amount of necessary data to be downloaded by the web client.

If the picture is 2048x2048, and the user browser window is only 800x600 it is more relevant instead of the whole picture to download the appropriate scaling of it. Moreover, it makes it possible to zoom dynamically on the picture online, which is useful to help the user correcting the face descriptors more precisely.

This deep-zoom format is composed of a pyramid of sub-images of different scales that the client interpolates to project it to the required user viewport. That means that each time a filter is applied, a sub-set of that pyramid of mini pictures has to be regenerated. This can represent hundreds of small pictures that have to be temporary saved on a hard drive to be available for download by the web client. That is why very fast I/O access hard drives such as SSD are required.

**f**. User workflow

The user workflow is the following:

**1.** The user connects to the main web server. If the web server is processing too many users the user is redirected to another web server;

**2.** The web server authenticates the user through its credentials or a 3rd party authentication system;

**3.** The user uploads a picture to the server through a web service, from a local drive, an URL or any kind of web picture sharing;

**4.** The picture is converted to Microsoft® Seadragon deep-zoom format, to make it downloaded faster and dynamically zoomable on a HTML canvas;

**5.** Face detection is applied on the server side using Haar classifiers. It detects faces and sub-elements of the faces i.e. eyes, mouth and nose;

**6.** The result of the detection is then processed by the JavaScript client and provided on the web page to the users as a transparent layer over the picture. This layer is called the "face descriptor";

**7.** When the face descriptor appears on the user web page, it can then be adjusted by the user to correct any mistake or lack of precision by the detection system;

**8.** Automatic portrait editing tools and filters can then be applied to the image by sending the face descriptor along with other filter parameters to the web service. The server then processes the filter and provides the updated transformed image in deep-zoom format to the client.

**Claims**

1. A method for digital image processing of portraits that provides user-adjusted localizations of different face features, comprising the following steps:

   a. A picture is loaded by the user from a local drive or any other kind of storage media (e.g. CDROM, DVDROM, USB key), or it can be uploaded from a local network connection or from internet using an URL or any kind of web picture storage service, or from a digital camera device;
   b. Automatic detection of one or more face features is applied using a set of classifiers. It detects face contours and sub-elements of the faces (e.g. eyes, brows, mouth, nose, skin, face contour, hair). The result of the detection is provided to the user using vectorial drawings. The coordinates of the different detected elements can then be adjusted by the user if necessary;
   c. Automatic editing or retouching tool is applied to the picture using the adjusted face feature coordinates.

2. An apparatus implementing the method described in claim 1, which consists in a grid computed system that processes all the face detection and image processing on the server side, and provide the user with the face detection and image processing results using a network connection.

3. A client server application protocol for apparatus described in claim 2 which is web based. The web client consists in a web page containing an HTML canvas that carries out the vectorial drawing of the face feature descriptors. The face feature detections and image processing algorithms are provided by a web service.

4. An orientation invariant face detection method that can be used in the portrait processing method described in claim 1, or any system that needs to be able to detect face or face features even if the portrait is rotated. The method is based on a set of classifiers which are not orientation invariant, but can provide the localization of the face contours, the eyes, the mouth and the nose for one specific orientation of the picture. This method is comprising the following steps (see FIG. 8):

   a. Run 7 face detection processes in parallel with $\alpha \in \{0, 15, -15, 30, -30, 45, -45\}$ that:

   ○ Load the picture;
   ○ Rotate the picture of $\alpha$ degrees; ○ Detect face contours, eyes, mouths and noses using orientation variant Haar classifiers;
   ○ Associate face features to face contours using face metrics;
   ○ Calculate a score for each detected face depending on the number of associated features.

   b. Imply missing face features using pre-defined face metrics;
   c. Filter faces with a score too low or with a too small surface area.

5. The face detection method of claim 4 wherein:

   24 face detections are processed with $\alpha \in \{0, 15, -15, 30, -30, 45, -45, 60, -60, 75, -75, 90, -90, 105, -105, 120, -120, 135, -135, 150, -150, 180\}$.

**6.** The face detection methods of claim 4 and 5 wherein:

the step between two rotations is any other value than 15°.

**7.** The face detection methods of claims 4, 5, and 6 wherein:

part of the face feature classifiers are used such as face contour + eyes, or eyes + nose, or a combination of any other elements of the portrait (e.g. brows, skin, hair, beard, glasses) as long as at least two classifiers are used.

**8.** The face detection methods of claim 7 wherein:

The face feature classifiers are any orientation variant classifiers other than Haar classifiers

**9.** Methods to perform an automatic rotation of the picture using methods of claims 8 and 9, by processing them and afterwards picking up the orientation on which the face detection score is the highest

**Amended claims in accordance with Rule 137(2) EPC.**

**1.** A method for automatic retouching of multiple portraits with different orientations in a single picture, using orientation-variant classifiers, and comprising the following steps:

a. A picture is loaded from a local drive or any other kind of storage media (e.g. CDROM, DVDROM, USB key), or uploaded from a local network connection or from internet using an URL or any kind of web picture storage service, or from a digital camera device;
b. 7 face detections are performed, with $\alpha \in \{0, 15, -15, 30, -30, 45, -45\}$. For each:

o Rotate the picture of $\alpha$ degrees;
o Detect the face contours, the eyes, the nose and the mouth, using orientation-variant Haar classifiers;
o Associate each face feature with the relevant face contour using face metrics;
o Calculate a score for each detected face, for each rotation, depending on the associated features;
o Resolve face feature conflicts;
o Filter faces with an evaluation function depending on the different scores and orientations;

c. Automatic editing or retouching tool can be applied to one of several of the different faces using the face feature coordinates.

**2.** The method of claim 1 wherein:

The angle range, instead of being comprised in interval [-45;45], is comprised in any other subinterval of [0;360].

**3.** The face detection methods of claim 1 and 2 wherein:

The step between two rotations is any other value than 15°.

**4.** The methods of claims 1 to 3, wherein:

Any other face feature classifier or any other combination of face feature classifiers is used such as face contour + eyes, or eyes + nose, or a combination of any other elements of the portrait (e.g. brows, skin, hair, beard, glasses).

**5.** The methods of claims 1 to 4 wherein:

The face feature classifiers are any orientation-variant face feature classifiers other than Haar classifiers.

**6.** The methods of claims 1 to 5 wherein:

The result of the detection is provided to the user prior to the editing or retouching. The coordinates of the different detected elements can then be adjusted by the user if necessary.

**7.** Methods to perform an automatic rotation of the picture using methods of claims 1 to 6, by processing them and afterwards picking up the orientation on which the sum of all face detection scores is the highest

**8.** The systems comprising at least one processor; and a memory comprising program instructions, wherein the program instructions are executable by the at least one processor, which implement the methods 1 to 7

**9.** The non-transitory computer-readable storage media, storing program instructions wherein the program instructions are computer-executable, which implement the methods 1 to 7

**FIG 1**

**FIG 2**

1. Edge features

(a)  (b)  (c)  (d)

2. Line features

(a)  (b)  (c)  (d)    (e)  (f)  (g)  (h)

3. Center-surround features

(a)  (b)

**FIG 3**

**FIG 4**

**FIG 5**

FIG 6

**FIG 7**

Launch 7 face detection processes in parallel
with $\alpha \in \{0, 15, -15, 30, -30, 45, -45\}$

Face feature detection
process with $\alpha = 0$

· · · · ·

Face feature detection
process $\alpha = -45$

Wait for
processes
to complete

- Load the picture

- Load the picture
- Rotate the picture of $\alpha$

Imply missing face
features using face metrics

Notify
process
complete

Detecting faces, eyes,
mouths and noses with haar
classifiers for $\alpha$ rotation

features
conflict?

yes

Remove feature
in lower score
face and reduce
the face score

Apply face metrics for each face:
- Try to match a pair of eyes, a mouth and
  a nose according to feature locations
- Calculate the score, the more matched
  features the higher, eye = 37pts, mouth
  = 18pts, nose = 7pts. Min score = 1
  Max score = 1 + 2 * 37 + 18 + 7 = 100

no

Remove faces with score < 10 and with
surface < Best scoring face surface / 3

EP 2 816 502 A1

FIG 8

17

FIG 9a

**FIG 9b**

**FIG 10**

**Web client 1**
- Display user pictures and face descriptors on HTML canvas
- Performs face descriptor corrections
- Updates the picture after filtering

•••••••••••••••••••• **Web client 2000 * N**

**World wide web**
**HTTP / HTTPS connections**

**Web server 1**
- Authenticates users
- Uploads/downloads pictures
- Provides the web service
- Load-balances to other web servers

**Web server 2** ••••••••••• **Web server N**

**User data cache**
**User pictures and face descriptors**

**Database**
*N servers*

**Grid computing middleware**
* Dispatches on the image processing grid:
- Face detection requests
- Image filtering requests with face descriptors as parameters
* Sends results to web server

**Image processing server 1**

**Image processing server 2** •••••••• **Image processing server 20 * N**

FIG 11

Image processing Server

User session box 1

**User session process**
- Loads an image from a specific user
- Launches 5 face feature detections on 7 different angles with 15° step
- Combine the face feature detection results to provide a face descriptor
- Applies image processing filters using the face descriptor corrected on-line by the user

Face feature detection process 1

Face feature detection process 2

Face feature detection process 7
- Picture rotation of $\alpha$ degrees, with $\alpha \in \{0, 15, -15, 30, -30, 45, -45\}$
- Face feature detections using 5 different Haar classifiers

User session box 2

User session box 3

User session box 100

Europäisches Patentamt

European Patent Office

Office européen des brevets

# EUROPEAN SEARCH REPORT

Application Number

EP 13 17 2338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "PerfectPortrait 2 at OnOne Software", , 21 March 2013 (2013-03-21), XP055079249, Retrieved from the Internet: URL:http://www.ononesoftware.com/products/perfect-portrait/ [retrieved on 2013-09-13] * the whole document * ----- | 1-3 | INV. G06K9/00 G06T11/80 |
| X,D | US 2013/044947 A1 (BRANDT JONATHAN W [US] ET AL) 21 February 2013 (2013-02-21) * paragraphs [0005], [0024] - [0056]; figures 4,6a,7 * ----- | 1-3 | |
| A | US 2010/239130 A1 (CHEN JIAN-REN [TW] ET AL) 23 September 2010 (2010-09-23) * abstract; paragraphs [0012], [0013], [0024] - [0031]; figures 1,2 * ----- | 1-3 | |
| | | | TECHNICAL FIELDS SEARCHED (IPC) |
| | | | G06K G06T |

~~The present search report has been drawn up for all claims~~

| Place of search | Date of completion of the search | Examiner |
|---|---|---|
| The Hague | 17 September 2013 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 13 17 2338

The Search Division considers that the present European patent application does not comply with the requirements of unity of invention and relates to several inventions or groups of inventions, namely:

1. claims: 1-3

   A client-server hardware and software architecture for implementing the method, known from D1, of processing portraits images, where the server is a grid of image processing servers.
   ---

2. claims: 4-9

   An orientation invariant face detection method employing parallel detections of at various orientation angles using non-orientation-invariant detectors.
   ---

**ANNEX TO THE EUROPEAN SEARCH REPORT
ON EUROPEAN PATENT APPLICATION NO.**

EP 13 17 2338

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2013

| Patent document cited in search report | Publication date | Patent family member(s) | Publication date |
|---|---|---|---|
| US 2013044947 A1 | 21-02-2013 | US 2013044947 A1<br>US 2013044958 A1 | 21-02-2013<br>21-02-2013 |
| US 2010239130 A1 | 23-09-2010 | TW 201035876 A<br>US 2010239130 A1 | 01-10-2010<br>23-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004186816 A
- US 2006062451 A
- JP 2011090466 B
- CN 101551911
- US 2013044947 A